# FASCICULE DE BREVET EUROPEEN

(11) **EP 3 727 911 B1**
(45) Date de publication et mention de la délivrance du brevet: **01.11.2023**
(21) Numéro de dépôt: 18833462.7
(22) Date de dépôt: 10.12.2018
(51) Int. Cl.: B60H 1/22, F24H 3/04, H05B 3/50, H05K 1/02, H05K 7/14, H05B 3/24

(54) **DISPOSITIF DE CHAUFFAGE ELECTRIQUE AVEC MOYENS DE MISE A LA MASSE**
ELEKTRISCHE HEIZEINHEIT MIT ERDUNG
ELECTRIC HEATING UNIT COMPRISING GROUNDING MEANS

(30) Priorité: 19.12.2017 FR 1762531
(43) Date de publication de la demande: 28.10.2020
(73) Titulaire: Valeo Systemes Thermiques, 78322 Le Mesnil Saint-Denis Cedex (FR)
(72) Inventeur: COUAPEL, Yann, 78322 Le Mesnil Saint-Denis Cedex (FR); GOGMOS, Erwan, 78322 Le Mesnil Saint-Denis Cedex (FR)
(74) Mandataire: Valeo Systèmes Thermiques
(86) Numéro de dépôt international: PCT/FR2018/053172
(87) Numéro de publication internationale: WO 2019/122582

(56) Documents cités:
- EP-A1- 1 630 013
- EP-A1- 1 998 406
- EP-A1- 2 226 586
- EP-A1- 2 428 747
- EP-A2- 1 338 451
- DE-U1-202007 001 079
- DE-U1-202009 005 582

## Description

### Domaine de l'invention

L'invention concerne un dispositif de chauffage pour boîtier de climatisation, comprenant des moyens de mise à la masse. L'invention concerne également un boîtier de climatisation comprenant un tel dispositif de chauffage. Elle trouvera ses applications, notamment, dans le domaine des véhicules automobiles.

### Etat de la technique

Il est connu des dispositifs de chauffage électrique destinés à être intégrés dans des boîtiers de climatisation de véhicule. Il s'agit soit de radiateurs additionnels, combinés avec des radiateurs de chauffage parcourus par un fluide caloporteur, dans les véhicules à moteur thermique, soit de radiateurs principaux, dans les véhicules électriques ou hybrides.

De tels dispositifs de chauffage comprennent un corps de chauffe accueillant des unités de chauffe munis d'éléments chauffants alimentés en courant électrique par des électrodes. Pour des raisons de sécurité électrique, il peut être nécessaire d'isoler les éléments chauffants et leurs électrodes d'alimentation de l'extérieur. Pour cela les unités de chauffe comprennent des tubes à l'intérieur desquels les éléments chauffant et leur électrode sont situés, la surface intérieure du tube étant dotée d'une couche isolante électriquement afin d'isoler les éléments chauffant et leur électrode.

Ces dispositifs de chauffage comprennent une unité de distribution capable de commander le courant circulant dans les unités de chauffe via notamment une carte électronique.

Plusieurs éléments appartenant aussi bien au corps de chauffe qu'à l'unité de distribution doivent nécessairement être mis à la masse par mesure de sécurité.

Pour rappel, la masse est la partie conductrice d'un matériel électrique susceptible d'être touchée par une personne, qui n'est pas normalement sous tension mais peut le devenir en cas de défaut d'isolement des parties actives de ce matériel.

Ainsi, toutes les carcasses métalliques du dispositif de chauffage doivent être reliées à la masse par sécurité. Dans les véhicules automobiles à carrosserie métallique, la carrosserie est utilisée comme masse électrique.

Il est d'usage de relier chaque élément métallique du dispositif de chauffage vers un plot par exemple, lui-même relié à la masse, c'est-à-dire la carrosserie dans l'exemple de l'automobile. Il s'agit notamment des éléments métalliques susceptibles d'être en contact avec du courant fort en cas de fuite de courant.

En particulier, dans le cas du dispositif de chauffage, pour chaque élément métallique à relier à la masse, il existe pièce additionnelle conductrice généralement placée dans une empreinte faite dans une pièce plastique appartenant au dispositif de chauffage. Cette pièce additionnelle conductrice est d'un côté raccordée à la masse via une tresse, et d'un autre côté raccordée à l'élément métallique via une pièce de liaison métallique, ou une tresse.

Cela implique la présence d'un grand nombre d'éléments, et une démultiplication des liaisons, correspondant souvent à des câbles de masse, entre chaque élément métallique et la masse. Ces liaisons sont parfois difficiles à intégrer, vu le peu de place disponible à l'intérieur du dispositif de chauffage. Et il existe un risque d'interférence entre ces liaisons et d'autres présentes au sein du dispositif de chauffage. Le document EP 1998 406 A1 montre un dispositif de chauffage pour une installation de ventilation, de chauffage et/ou de climatisation d'un véhicule automobile, qui comprend un corps de chauffe alimenté en courant pour chauffer un flux d'air traversant ledit corps de chauffe, et ce dispositif de chauffage comprend des moyens de mise à la masse.

### Résumé de l'invention

La présente invention a pour objectif de pallier les différents inconvénients énoncés ci-dessus, par un dispositif de chauffage permettant une mise à la masse de ses éléments métalliques au moyen d'une construction simple et aisée au sein du corps de chauffe et de l'unité de distribution, et où il n'existe pas de risque d'interférence.

Ce but est atteint grâce à un dispositif de chauffage pour boîtier de climatisation comportant, de façon classique, un corps de chauffe alimenté en courant pour chauffer un flux d'air traversant ledit corps de chauffe, le corps de chauffe comprenant des éléments de chauffe parcourus par ledit courant et étant situés dans des tubes isolés électriquement des éléments de chauffe, lesdits éléments de chauffe étant contrôlés via une unité de distribution, le dispositif de chauffage comprenant des moyens de mise à la masse de plusieurs éléments métalliques répartis dans le corps de chauffe et l'unité de distribution.

Selon l'invention lesdits moyens de mise à la masse consistent en un circuit de mise à la masse parcourant le corps de chauffe et l'unité de distribution, au moins une partie dudit circuit de mise à la masse étant intégrée dans un boîtier de protection de l'unité de distribution.

L'idée principale de cette invention consiste à utiliser le boîtier de protection de l'unité de distribution pour faire cheminer le circuit de mise à la masse.

L'utilisation d'un tel boîtier permet de supprimer l'utilisation des pièces plastiques dans lesquelles étaient pratiquées les empreintes.

Le boîtier de l'unité de distribution rempli plusieurs fonctions, à savoir la fonction principale de protection de l'unité de distribution, mais également la fonction de base isolante pour le cheminement du circuit de mise à la masse.

Etant donné que cette partie de circuit est « intégrée » au boîtier, cela implique qu'elle ne chemine pas dans l'enceinte de l'unité de distribution. Il n'y a plus de câbles de mise à la masse qui sillonnent l'unité de distribution, et qui risque d'interférer avec d'autres composants. Le circuit de mise à la masse est ainsi simplifié.

Selon les différents modes de réalisation de l'invention, qui pourront être pris ensemble ou séparément :
- ladite au moins une partie dudit circuit de mise à la masse est conçue dans un matériau conducteur électriquement, métallique du type aluminium, acier, laiton.
- selon l'invention ladite au moins une partie du circuit de mise à la masse consiste en une barre de raccordement disposée au sein du boîtier : cette barre est donc intégrée au boîtier, et traverse l'unité de distribution via le boîtier. Il n'y a plus une multitude de câbles de masse, mais une unique barre de raccordement à la masse qui chemine au niveau de l'unité de distribution. Par conséquent, il n'existe plus aucun câblage spécifique à réaliser lors du montage de l'unité de distribution, ce qui permet un gain de temps considérable. De plus, la manipulation est rendue plus facile, puisqu'il n'existe au final plus qu'une seule pièce à manipuler, c'est-à-dire le boîtier, lors de la mise en place du circuit de mise à la masse.
- ledit boîtier de protection est conçu dans un matériau isolant électriquement, du type plastique.
- ladite au moins une partie du circuit de mise à la masse est surmoulée dans le boîtier, et forme un insert : ce surmoulage permet de rendre invisible une partie du circuit de mise à la masse, et de protéger cette partie-là vis-à-vis des autres composants disposés dans l'unité de distribution. En effet, le surmoulage empêche tout contact de cette partie de circuit avec les autres composants. Le surmoulage permet aussi d'éviter tout risque de détachement de la barre de raccordement à cause des vibrations du dispositif de chauffage embarqué. De façon avantageuse, la barre forme un insert dans le boîtier, ce qui permet de rigidifier le boîtier de protection. De cette manière, il est possible de conjuguer à la fois une fonction de mise à la masse avec une fonction de rigidification du boîtier protection, au moyen d'une unique barre. Cette mutualisation des fonctions permet de plus de contribuer à la compacité de l'unité de distribution.
- selon l'invention, le dispositif de chauffage comporte une plaque métallique de dissipation de chaleur, par laquelle passe le circuit de mise à la masse.
- selon l'invention, ladite barre comporte :
   - une première extrémité reliée électriquement à la plaque ;
   - une partie centrale surmoulée dans le boîtier ;
   - une deuxième extrémité libre, surmoulée au moins partiellement dans le boîtier, et raccordée à un plot de mise à la masse.
- ladite barre est solidaire de la plaque et comporte :
   - une partie centrale surmoulée dans le boîtier ;
   - une extrémité libre, surmoulée au moins partiellement dans le boîtier, et raccordée à un plot de mise à la masse.
- la barre et la plaque peuvent être reliées notamment mais non exclusivement par clinchage/déformation ou au moyen d'une pièce intermédiaire telle qu'une vis ou un rivet.
- la barre s'étend orthogonalement à la plaque.
- l'unité de distribution comporte une carte électronique de commande sur laquelle sont fixés des composants dégageant de la chaleur, ladite plaque étant en contact avec ces composants : il s'agit notamment de transistors.
- la barre s'étend sur sensiblement toute la longueur de la carte électronique et à distance de la carte électronique : cela permet d'éviter tout contact avec les composants fixés sur la carte électronique.
- il n'existe qu'un unique circuit de mise à la masse parcourant le corps de chauffe et l'unité de distribution et formé par la mise en série desdits éléments métalliques par contact direct entre lesdits éléments métalliques : le circuit est formé par une chaîne d'éléments métalliques à mettre à la masse. Dans cette chaîne, les éléments métalliques se touchent directement deux à deux, de manière à assurer la continuité électrique. Il existe ainsi un parcours d'éléments métalliques en série au sein du dispositif de chauffage, formant le circuit de mise à la masse. Chaque élément métallique forme un maillon de la chaîne électrique.
- le dispositif de chauffage comporte un élément de liaison électrique entre le corps de chauffe et ladite plaque.
- les tubes sont reliés électriquement les uns aux autres via des dissipateurs thermiques qui sont conducteurs électriquement, le circuit de mise à la masse passant successivement par ces tubes et ces dissipateurs.
- ledit élément de liaison électrique est disposé entre la plaque et un tube situé à une extrémité du corps de chauffe et appelé tube d'extrémité.
- ledit élément de liaison électrique consiste en une agrafe à lame flexible apte à assurer une continuité électrique entre ledit tube d'extrémité et ladite plaque.

L'invention concerne aussi un boîtier de climatisation comprenant un dispositif de chauffage tel que décrit ci-dessus.

### Présentation des figures

L'invention sera mieux comprise, et d'autres buts, détails, caractéristiques et avantages de celle-ci apparaîtront plus clairement au cours de la description explicative détaillée qui va suivre, d'au moins un mode de réalisation de l'invention donné à titre d'exemple purement illustratif et non limitatif, en référence aux dessins schématiques annexés.

Sur ces dessins :
- la figure 1 illustre en perspective un dispositif de chauffage selon l'invention,
- la figure 2 montre en perspective une barre de mise à la masse reliée à une plaque de dissipation thermique,
- la figure 3 montre en perspective la barre de mise à la masse de la figure 5 moulée dans un boîtier de protection de l'unité de distribution,
- la figure 4 est une vue en coupe de la figure 3 au niveau de la barre de mise à la masse.

### Description détaillée

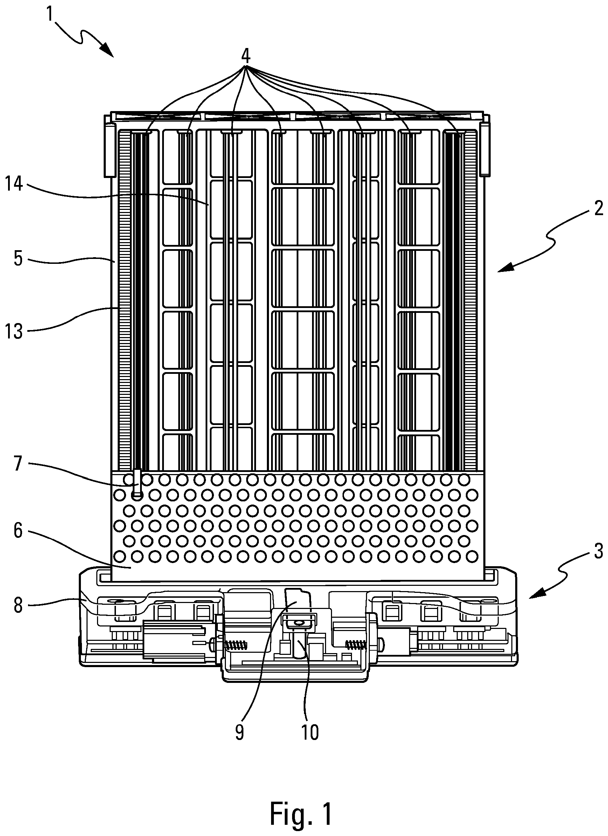

En référence à la figure 1, l'invention concerne un dispositif de chauffage 1 électrique. Il s'agit, par exemple, d'un dispositif de chauffage 1, dit haute tension, c'est-à-dire destiné à être alimenté par un courant continu (DC) ou alternatif (AC) présentant une tension électrique supérieure à 60 V, notamment compris entre 60 et 1000 V, plus particulièrement compris entre 180 et 600 V, et/ou permettant de dégager une puissance de chauffe sur l'air ou une puissance électrique consommée supérieure à 2 kW, notamment comprise entre 2 kW et 10 kW.

Ledit dispositif de chauffage 1 comprend un corps de chauffe 2 alimenté en courant électrique pour chauffer un flux d'air traversant ledit corps de chauffe 2.

Ledit corps de chauffe 2 présente ici une configuration sensiblement parallélépipédique, s'étendant en surface. Il est destiné à être positionné de façon transversale au flux d'air à réchauffer. Plus précisément, ledit flux d'air est destiné à être orienté perpendiculairement audit corps de chauffe 2 , c'est-à-dire perpendiculairement au plan de la figure 1.

Le corps de chauffe 2 comprend des éléments de chauffe (non représentés) parcourus par ledit courant. Les éléments de chauffe sont, par exemple, des résistances à effet CTP (pour coefficient de température positif).

Les éléments de chauffe sont situés à l'intérieur de tubes 4 métalliques. Pour éviter tout contact électrique entre les éléments de chauffe et les tubes 4, une couche de matière isolante électriquement et conductrice thermiquement revêt la surface intérieure des tubes 4.

Chaque ensemble tube 4 /éléments de chauffe forme ce qu'on appelle une unité de chauffe.

Lesdites unités de chauffe sont alimentées sélectivement en courant. On entend par là que chaque unité de chauffe est alimentée en courant indépendamment des autres et peut donc être parcourue par un courant différent, notamment par son intensité, du courant parcourant les autres unités de chauffe. La valeur du courant en jeu ici est en particulier la valeur du courant moyen ou du courant efficace.

Le corps de chauffe 2 peut comprendre des dissipateurs 13 thermiques, par exemple des ailettes, en relation de contact thermique avec les tubes 4. Les dissipateurs 13 sont positionnés, notamment, entre lesdits tubes 4. Dans un souci de clarté, seuls certains dissipateurs 13 s'étendant des tubes 4 d'extrémité ont été représentés, afin de ne pas surcharger la figure 1.

Ledit corps de chauffe 2 comprend un cadre 5, notamment en matière plastique, accueillant lesdites unités de chauffe et servant au maintien desdits tubes 4.

Des barres intermédiaires 14 sont également prévues entre les tubes 4 afin de les maintenir en position.

Préférentiellement, le dispositif de chauffage 1 comprend en outre une unité de distribution 3 apte à commander le courant circulant dans ledit corps de chauffe 2.

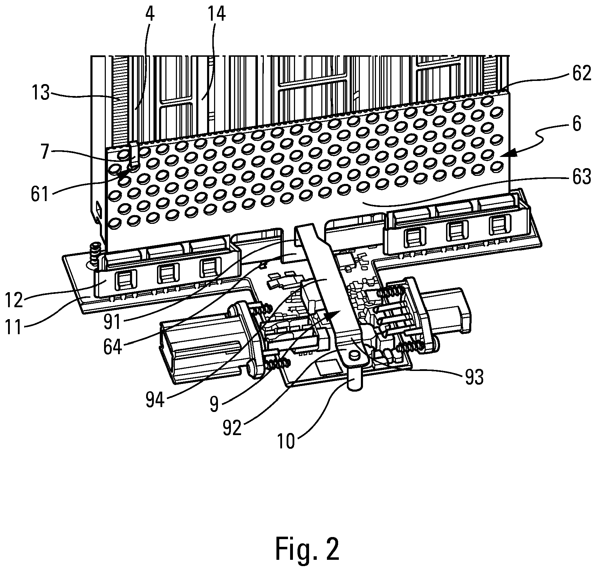

Ladite unité de distribution 3 est avantageusement configurée pour piloter le courant alimentant le corps de chauffe 2, en particulier les différentes unités de chauffe, par exemple à l'aide de commutateurs pilotés, permettant de contrôler respectivement une circulation de courant dans chacune des unités de chauffe. Il s'agit, notamment, de transistors 12, par exemple du type Mosfet ou IGBT, fonctionnant en particulier par modulation de largeur d'impulsions. Ces transistors 12 sont notamment visibles en figure 2, et sont montés sur une carte électronique 11 en forme de T, présentant donc un axe de symétrie centrale.

Ladite unité de distribution 3 comprend un boîtier 8, visible aux figures 1, 3 et 4, qui recouvre entièrement ladite carte électronique 11, et qui comprend une face de connexion 83, servant au montage et/ou à la fixation mécanique du corps de chauffe 2. Ce boîtier 8 est de préférence conçu dans un matériau plastique, ayant des propriétés isolantes électriquement, et obtenu par moulage.

Lors du fonctionnement des éléments de chauffe, les transistors 12 dégagent beaucoup de chaleur. Afin d'éviter toute surchauffe au sein du boîtier 8, une plaque 6 de dissipation thermique est prévue dans le dispositif de chauffage 1. Cette plaque 6 consiste en une tôle perforée, positionnée dans un plan parallèle au plan du corps de chauffe 2, et se situant devant les tubes 4 de manière à ce que le flux d'air traversant le corps de chauffe 2 traverse également cette plaque 6 perforée. Ainsi, cette plaque 6 aide à réchauffer le flux d'air.

La plaque 6 se compose principalement d'un corps 63 perforé duquel s'étendent des pattes (cachées par les transistors 12 sur la figure 2) aptes à venir au contact des transistors 12 de manière à puiser les calories émanant des transistors 12. La plaque 6 se réchauffe ainsi, via les transistors 12, et est ensuite refroidie via le flux d'air.

Dans un tel dispositif de chauffage 1, il est essentiel que les éléments métalliques soient mis à la masse, de manière à le sécuriser électriquement.

Pour ce faire, il existe un circuit de mise à la masse qui traverse l'intégralité du dispositif de chauffage 1, afin que chaque élément métallique puisse y être raccordé. En particulier, ce circuit de mise à la masse se compose d'une succession d'éléments métalliques positionnés en série et en contact direct deux à deux, et formant ainsi le circuit.

Au niveau du corps de chauffe 2, les tubes 4 ainsi que les dissipateurs 13 et les barres intermédiaires 14 sont métalliques. Dans la configuration du dispositif de chauffage 1 selon invention, les dissipateurs 13 sont tous raccordés à un tube 4 par contact direct, et les dissipateurs 13 de deux tubes 4 adjacents se rejoignent et sont en contact direct également, ou se rejoignent au niveau d'une barre intermédiaire 14. Par conséquent, toute la rangée de tubes 4 de dissipateurs 13, et de barres intermédiaires 14 sont en contact électrique les uns avec les autres, et le circuit de mise à la masse passe ainsi dans l'intégralité des tubes 4, des dissipateurs 13, et des barres intermédiaires 14 du corps de chauffe 2.

En sortie de cette rangée de tubes 4, de dissipateurs 13 et de barres intermédiaires 14, un élément de liaison électrique 7 est disposé entre un tube 4 d'extrémité et la plaque 6 perforée, comme illustré en particulier aux figures 1 et 2. Cet élément de liaison électrique 7 assure la continuité électrique entre les tubes 4 et la plaque 6 perforée.

Par exemple, cet élément de liaison électrique 7 consiste en une agrafe 7 métallique disposée à cheval sur la plaque 6 perforée, et dotée d'une lame flexible en appui sur le tube 4 d'extrémité.

Tout autre type d'élément de liaison électrique 7 peut être envisagé, du moment qu'il réalise une continuité électrique entre la plaque 6 et les tubes 4.

Le circuit de mise à la masse passe à travers cet élément de liaison électrique 7, puis à travers la plaque 6 perforée.

Le circuit de mise à la masse se poursuit ensuite au travers d'une barre 9 métallique, par exemple en aluminium, en acier ou en laiton, passant au-dessus de toute la carte électronique 11 selon son axe de symétrie, comme cela est notamment visible en figure 2. Cette barre 9 s'étend orthogonalement de la plaque 6 perforée.

La barre 9 comporte :
- une première extrémité 91 fixée à la plaque 6 perforée
- une partie centrale 94 s'étendant sur la carte électronique 11
- une seconde extrémité 92 libre et raccordée à un plot 10 de mise à la masse.

Plus précisément, la première extrémité 91 consiste en une patte d'allure perpendiculaire à la partie centrale 94. Elle est fixée par soudure par exemple à une languette centrale 64 s'étendant depuis le corps 63 perforé de la plaque 6. Elle peut être fixée par tout autre moyen permettant d'assurer la continuité électrique entre la plaque 6 perforée et la barre 9.

Plus précisément encore, la seconde extrémité 92 comporte un orifice dans lequel est boulonné le plot 10 de mise à la masse. La barre 9 comporte un épaulement 93 localisé juste en amont de la seconde extrémité 92.

Le circuit de mise à la masse se termine ainsi au niveau du plot 10. Dans le cas d'un véhicule automobile par exemple, ce plot 10 sera raccordé à la carrosserie du véhicule, qui constitue la référence de mise à la masse.

Le circuit de mise à la masse peut également prendre le chemin inverse, c'est-à-dire en passant par le plot, la barre, la plaque, l'agrafe, puis la rangée de tubes/ailettes/barres intermédiaires.

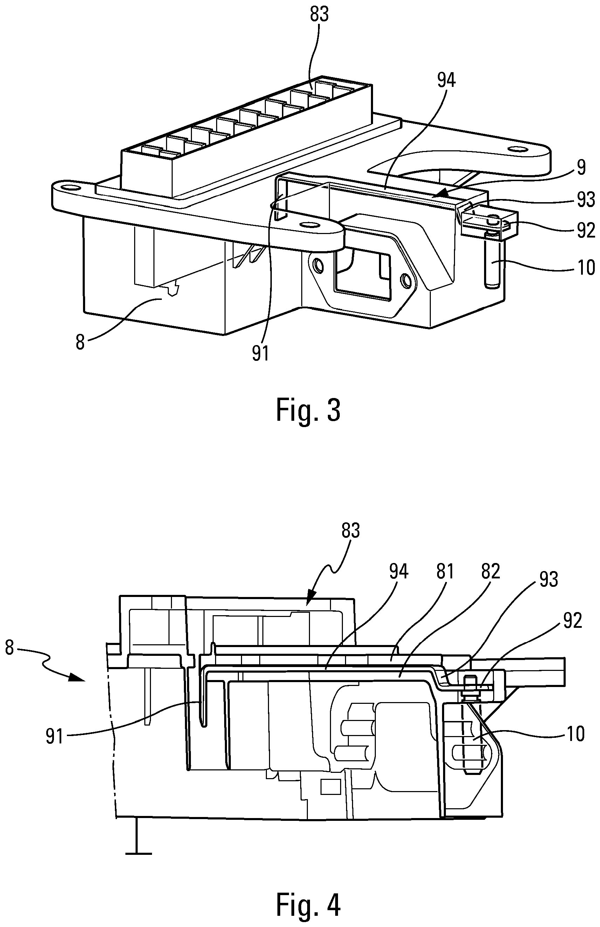

Avantageusement, cette barre 9 est surmoulée dans le boîtier 8 de protection, comme illustré aux figures 3 et 4. Un tel surmoulage permet également de positionner la barre 9 à distance de la carte électronique 11 afin d'éviter tout contact avec les composants de la carte 11.

En particulier, la partie centrale 94 ainsi que la seconde extrémité 92 de la barre 9 sont entièrement noyées dans la matière du boîtier 8 de protection. La première extrémité 91 quant à elle est au raz du boîtier 8. Comme illustré en figure 4, il existe une couche de matière plastique supérieure 81 et une couche de matière plastique inférieure 82 appartenant boîtier 8 de protection et venant prendre en sandwich la barre 9.

La barre 9 consiste ainsi en un insert, servant notamment à rigidifier le boîtier 8. Ainsi, en plus de sa fonction de mise à la masse, la barre 9 a une fonction de consolidation du boîtier 8.

Le plot 10 saille du boîtier 8 de protection, afin d'être accessible pour sa liaison avec la masse.

De cette manière, il n'existe aucun câblage particulier à réaliser au sein du dispositif de chauffage 1 pour réaliser la mise à la masse des éléments métalliques. Tous les éléments métalliques du dispositif de chauffage 1 entrent en contact les uns avec les autres, en série, de manière à former un unique circuit de mise à la masse parcourant le dispositif de chauffage 1.

L'invention concerne encore un boîtier de climatisation comprenant un dispositif de chauffage 1 tel que décrit plus haut. Ledit boîtier de climatisation comprend un corps de circulation du flux d'air à l'intérieur duquel ledit dispositif de chauffage 1 est situé.

En ce qui concerne la description ci-dessus, les relations dimensionnelles optimales pour les parties de l'invention, en incluant les variations de taille, de matériaux, de formes, de fonction et de modes de fonctionnement, d'assemblage et d'utilisation, sont considérées comme apparentes et évidentes pour l'homme du métier, et toutes les relations équivalentes à ce qui est illustré dans les dessins et ce qui est décrit dans le mémoire sont censées être incluses dans la présente invention qui est définie dans les revendications 1 à 8 .

## Revendications

1. Dispositif de chauffage (1) pour boîtier de climatisation, ledit dispositif de chauffage (1) comprenant un corps de chauffe (2) alimenté en courant pour chauffer un flux d'air traversant ledit corps de chauffe (2), le corps de chauffe (2) comprenant des éléments de chauffe parcourus par ledit courant, lesdits éléments de chauffe étant contrôlés via une unité de distribution (3), le dispositif de chauffage (1) comprenant des moyens de mise à la masse de plusieurs éléments métalliques répartis dans le corps de chauffe (2) et l'unité de distribution (3),
lesdits moyens de mise à la masse consistant en un circuit de mise à la masse parcourant le corps de chauffe (2) et l'unité de distribution (3), au moins une partie dudit circuit de mise à la masse étant intégrée dans un boîtier (8) de protection de l'unité de distribution (3), ladite au moins une partie du circuit de mise à la masse consiste en une barre (9) de raccordement disposée au sein du boîtier (8), **caractérisé en ce que** les éléments de chauffe sont situés dans des tubes (4) isolés électriquement des éléments de chauffe et ledit dispositif de chauffage (1) comporte une plaque (6) métallique de dissipation de chaleur, par laquelle passe le circuit de mise à la masse, et **en ce que** ladite barre (9) comporte :
- une première extrémité (91) reliée électriquement à la plaque (6) ;
- une partie centrale (94) surmoulée dans le boîtier (8) ;
- une deuxième extrémité (92) libre, surmoulée au moins partiellement dans le boîtier (8), et raccordée à un plot (10) de mise à la masse.

2. Dispositif de chauffage (1) selon la revendication précédente, **caractérisé en ce que** ladite au moins une partie du circuit de mise à la masse est conçue dans un matériau conducteur électriquement, métallique du type aluminium, acier, laiton.

3. Dispositif de chauffage (1) selon l'une des revendications précédentes, **caractérisé en ce que** ledit boîtier (8) de protection est conçu dans un matériau isolant électriquement, du type plastique.

4. Dispositif de chauffage (1) selon l'une des revendications précédentes, **caractérisé en ce que** ladite au moins une partie du circuit de mise à la masse est surmoulée dans le boîtier (8), et forme un insert.

5. Dispositif de chauffage (1) selon l'une quelconque des revendications précédentes, **caractérisé en ce que** la barre (9) s'étend orthogonalement à la plaque (6).

6. Dispositif de chauffage (1) selon l'une des revendications précédentes, **caractérisé en ce que** l'unité de distribution (3) comporte une carte électronique (11) de commande sur laquelle sont fixés des composants (12) dégageant de la chaleur, ladite plaque (6) étant en contact avec ces composants (12).

7. Dispositif de chauffage (1) selon la revendication précédente, **caractérisé en ce que** la barre (9) s'étend sur sensiblement toute la longueur de la carte électronique (11) et à distance de la carte électronique (11).

8. Boîtier de climatisation comprenant un dispositif de chauffage (1) selon l'une quelconque des revendications précédentes.

## Patentansprüche

1. Heizungsvorrichtung (1) für ein Klimaanlagengehäuse, wobei die Heizungsvorrichtung (1) einen Heizkörper (2) umfasst, der mit Strom versorgt wird, um einen den Heizkörper (2) durchquerenden Luftstrom zu erhitzen, wobei der Heizkörper (2) Heizelemente umfasst, die von dem Strom durchflossen werden wobei die Heizelemente über eine Verteilungseinheit (3) kontrolliert werden, wobei die Heizungsvorrichtung (1) Erdungsmittel zum Erden mehrerer Metallelemente umfasst, die in dem Heizkörper (2) und der Verteilungseinheit (3) verteilt sind,
wobei die Erdungsmittel aus einem Erdungskreis bestehen, der den Heizkörper (2) und die Verteilungseinheit (3) durchläuft, wobei mindestens ein Teil des Erdungskreises in ein Schutzgehäuse (8) der Verteilungseinheit (3) integriert ist,
wobei der mindestens eine Teil des Erdungskreises aus einer Anschlussschiene (9) besteht, die in dem Gehäuse (8) angeordnet ist, **dadurch gekennzeichnet, dass** den Heizelementen in Rohren (4) gelegen sind, die elektrisch von den Heizelementen isoliert sind, und dass die Heizungsvorrichtung (1) eine Metallplatte (6) zur Wärmeabführung umfasst, über die der Erdungskreis verläuft, und dadurch, dass die Schiene (9) umfasst:
- ein erstes Ende (91), das elektrisch mit der Platte (6) verbunden ist;
- einen zentralen Teil (94), der in dem Gehäuse (8) angeformt ist;
- ein freies zweites Ende (92), das mindestens teilweise in dem Gehäuse (8) angeformt ist und an ein Erdungskontaktstück (10) angeschlossen ist.

2. Heizungsvorrichtung (1) nach dem vorhergehenden Anspruch, **dadurch gekennzeichnet, dass** der mindestens eine Teil des Erdungskreises aus einem elektrisch leitenden metallischen Material vom Typ Aluminium, Stahl, Messing konzipiert ist.

3. Heizungsvorrichtung (1) nach einem der vorhergehenden Ansprüche, **dadurch gekennzeichnet, dass** das Schutzgehäuse (8) aus einem elektrisch isolierenden Material vom Typ Kunststoff konzipiert ist.

4. Heizungsvorrichtung (1) nach einem der vorhergehenden Ansprüche, **dadurch gekennzeichnet, dass** der mindestens eine Teil des Erdungskreises in dem Gehäuse (8) angeformt ist und einen Einsatz bildet.

5. Heizungsvorrichtung (1) nach einem der vorhergehenden Ansprüche, **dadurch gekennzeichnet, dass** sich die Schiene (9) orthogonal zu der Platte (6) erstreckt.

6. Heizungsvorrichtung (1) nach einem der vorhergehenden Ansprüche, **dadurch gekennzeichnet, dass** die Verteilungseinheit (3) eine Leiterplatte (11) zur Steuerung umfasst, auf der Bauelemente (12) befestigt sind, die Wärme abgeben, wobei die Platte (6) mit diesen Bauelementen (12) in Kontakt ist.

7. Heizungsvorrichtung (1) nach dem vorhergehenden Anspruch, **dadurch gekennzeichnet, dass** sich die Schiene (9) über im Wesentlichen die gesamte Länge der Leiterplatte (11) und im Abstand von der Leiterplatte (11) erstreckt.

8. Klimaanlagengehäuse mit einer Heizungsvorrichtung (1) nach einem der vorhergehenden Ansprüche.

## Claims

1. Heating device (1) for an air-conditioning unit, said heating device (1) comprising a heating body (2) supplied with current in order to heat an airflow passing through said heating body (2), the heating body (2) comprising heating elements that are flowed through by said current, said heating elements being controlled via a distribution unit (3), the heating device (1) comprising means for grounding a plurality of metal elements that are distributed in the heating body (2) and the distribution unit (3),
said grounding means consisting of a grounding circuit passing through the heating body (2) and the distribution unit (3), at least one part of said grounding circuit being integrated into a protective housing (8) of the distribution unit (3),
said at least one part of the grounding circuit consisting of a connecting bar (9) arranged within the housing (8), **characterized in that** the heating elements are located in tubes (4) that are electrically insulated from the heating elements, and said heating device (1) comprises a metal heat sink plate (6) through which the grounding circuit passes,
and **in that** said bar (9) comprises:
- a first end (91) electrically connected to the plate (6) ;
- a central part (94) overmoulded into the housing (8);
- a second free end (92), overmoulded at least partially into the housing (8), and connected to a grounding stud (10) .

2. Heating device (1) according to the preceding claim, **characterized in that** said at least one part of the grounding circuit is made from an electrically conductive aluminium, steel or brass metal material.

3. Heating device (1) according to either of the preceding claims, **characterized in that** said protective housing (8) is made from an electrically insulating plastic material.

4. Heating device (1) according to one of the preceding claims, **characterized in that** said at least one part of the grounding circuit is overmoulded into the housing (8) and forms an insert.

5. Heating device (1) according to one of the preceding claims, **characterized in that** the bar (9) extends orthogonally to the plate (6).

6. Heating device (1) according to one of the preceding claims, **characterized in that** the distribution unit (3) comprises an electronic control board (11) on which heat-releasing components (12) are fixed, said plate (6) being in contact with these components (12).

7. Heating device (1) according to the preceding claim, **characterized in that** the bar (9) extends over substantially the entire length of the electronic board (11) and at a distance from the electronic board (11).

8. Air-conditioning unit comprising a heating device (1) according to any one of the preceding claims.
